# EUROPÄISCHE PATENTSCHRIFT

(11) **EP 3 084 940 B1**
(45) Veröffentlichungstag und Bekanntmachung des Hinweises auf die Patenterteilung: **13.09.2017**
(21) Anmeldenummer: 15700306.2
(22) Anmeldetag: 14.01.2015
(51) Int. Cl.: H02K 41/03, B60R 16/06, H05F 3/02

(54) **LINEARES TRANSPORTSYSTEM UND VERFAHREN ZUM BETREIBEN DES LINEAREN TRANSPORTSYSTEMS**
LINEAR TRANSPORT SYSTEM AND METHOD FOR OPERATING THE LINEAR TRANSPORT SYSTEM
SYSTÈME TRANSPORTEUR LINÉAIRE ET PROCÉDÉ DE FONCTIONNEMENT DU SYSTÈME TRANSPORTEUR LINÉAIRE

(30) Priorität: 21.01.2014 DE 102014100636
(43) Veröffentlichungstag der Anmeldung: 26.10.2016
(73) Patentinhaber: Beckhoff Automation GmbH, 33415 Verl (DE)
(72) Erfinder: PRÜSSMEIER, Uwe, 32657 Lemgo (DE)
(74) Vertreter: Patentanwaltskanzlei WILHELM & BECK
(86) Internationale Anmeldenummer: PCT/EP2015/050564
(87) Internationale Veröffentlichungsnummer: WO 2015/110328

(56) Entgegenhaltungen:
- DE-A1- 10 013 222
- DE-A1- 19 908 922
- JP-A- H08 324 790
- US-A1- 2006 099 843

## Beschreibung

Die Erfindung betrifft ein lineares Transportsystem und ein Verfahren zum Betreiben eines solchen linearen Transportsystem.

Transportsysteme, wie sie aus dem Stand der Technik, beispielsweise aus der DE 10 2012 103 378 A1, bekannt sind, umfassen in der Regel einen Linearmotor, der einen Wagen antreiben kann. Hierbei läuft der Wagen in der Regel mit einer Laufrolle entlang oder in einer Führungsschiene. Bei der Verwendung von nichtleitenden Materialien für die Führungsschiene oder für die Laufrolle können elektrische Ladungsträger, die sich bei einer Verlagerung des Wagens auf der Oberfläche des Wagens sammeln, nicht auf die Führungsschiene abfließen. Das heißt also insbesondere, dass sich der Wagen gegenüber seiner Umgebung elektrisch aufladen kann. Dieser Effekt ist ähnlich wie bei einem Bandgenerator, der auch als Van-de-Graaff-Generator bezeichnet werden kann.

Da der Wagen in der Regel für die Laufrollen des Wagens einen faradayschen Käfig bildet, wird die elektrostatische Aufladung des Wagens bei seiner Verlagerung dadurch noch verstärkt.

Aufgrund der elektrostatischen Aufladung kann es zu einer Funkenentladung zwischen dem Wagen und seiner Umgebung kommen. Dies kann zu elektrischen Funktionsstörungen führen. Insbesondere kann ein Bedienpersonal einen elektrischen Schlag erleiden. Insbesondere kann ein Risiko eines Brandes erhöht sein.

Die JP H08 324790 A offenbart die Merkmale des Oberbegriffs des Anspruchs 1 und zeigt ein Transportsystem auf der Basis eines Linearmotors, bei dem ein mit Permanentmagneten versehener Wagen entlang eines Führungspfades, der eine Statorvorrichtung aufweist, gezogen wird. Um eine elektrostatische Aufladung zu vermeiden, ist am Transportwagen eine elektrische Kontakteinrichtung vorgesehen, die eine elektrische Verbindung zwischen dem Wagen und der Führungsschiene herstellt.

Die der Erfindung zugrunde liegende Aufgabe kann daher darin gesehen werden, ein lineares Transportsystem und ein Verfahren zum Betreiben des linearen Transportsystems bereitzustellen, welche eine verbesserte elektrische Verbindung zwischen dem Wagen und der Führungsschiene bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird eine Transportvorrichtung bereitgestellt, umfassend:
- zumindest einen Wagen aufweisend zumindest eine Laufrolle,
- eine Führungsschiene zum Führen des Wagens,
- wobei die Führungsschiene eine Lauffläche zum Abrollen der Laufrolle umfasst, so dass die Laufrolle während eines mittels der Führungsschiene geführten Verlagerns des Wagens auf der Lauffläche abrollen kann,
- wobei zumindest eine verschieden von der Laufrolle gebildete elektrische Kontakteinrichtung gebildet ist, die ausgebildet ist, beim mittels der Führungsschiene geführten Verlagern des Wagens eine elektrische Verbindung zwischen dem Wagen und der Führungsschiene zu bilden.

Nach einem weiteren Aspekt wird ein Verfahren zum Betreiben der Transportvorrichtung bereitgestellt, wobei beim mittels der Führungsschiene geführten Verlagern des Wagens die elektrische Kontakteinrichtung eine elektrische Verbindung zwischen dem Wagen und der Führungsschiene bildet.

Nach noch einem Aspekt wird ein Transportsystem bereitgestellt, das die Transportvorrichtung und eine Antriebsvorrichtung zum Antreiben des Wagens umfasst.

Die Erfindung umfasst also insbesondere den Gedanken, während der Verlagerung des Wagens eine elektrische Verbindung zwischen dem Wagen und der Führungsschiene zu bilden. Dies insbesondere mit einer elektrischen Kontakteinrichtung, die verschieden von der Laufrolle gebildet ist. Das heißt also insbesondere, dass die elektrische Kontakteinrichtung ein Element oder mehrere Elemente umfasst, welches respektive welche getrennt von der Laufrolle gebildet oder hergestellt ist respektive sind. Es ist also insbesondere eine elektrische Verbindung zwischen dem Wagen und der Führungsschiene mittels der elektrischen Kontakteinrichtung gebildet. Dies insbesondere nachdem der Wagen mit seiner Laufrolle in die Führungsschiene gesetzt wurde.

Dadurch kann also in vorteilhafter Weise eine elektrische Ladung, die sich während des Verlagerns auf einer Oberfläche des Wagens bildet, über die elektrische Kontakteinrichtung auf die Führungsschiene abfließen. Eine elektrostatische Aufladung des Wagens kann somit in vorteilhafter Weise vermindert oder sogar verhindert werden. Dies kann somit in vorteilhafter Weise einen Überschlag, also eine Funkenentladung, zwischen dem Wagen und der Führungsschiene verhindern. Dadurch kann in vorteilhafter Weise eine Beschädigung von elektrischen Bauteilen verhindert werden. Ebenso kann eine Gefahr für einen Nutzer durch einen elektrischen Schlag verhindert werden. Eine Brandgefahr und/oder eine elektrische Funktionsstörung von elektrischen Bauteilen können ebenfalls in vorteilhafter Weise vermindert oder sogar verhindert werden. Die elektrische Kontakteinrichtung wirkt somit in vorteilhafter Weise analog zu einem Blitzableiter oder einer Erdung. Insofern kann die elektrische Kontakteinrichtung auch als eine Erdungseinrichtung oder Ableitungseinrichtung bezeichnet werden.

Nach einer Ausführungsform der Erfindung kann vorgesehen sein, dass die elektrische Kontakteinrichtung ein elektrisch leitendes Fluid umfasst, das auf einer auf der Lauffläche abrollbaren Rollfläche der Laufrolle und/oder auf der Lauffläche aufgebracht ist.

Dadurch ist in vorteilhafter Weise in einer bereits bestehenden Transportvorrichtung eine einfache Möglichkeit gegeben, eine elektrische Verbindung zwischen der Laufrolle und der Führungsschiene zu bilden. Weitergehende Umbaumaßnahmen einer bereits bestehenden Transportvorrichtung sind somit in vorteilhafter Weise nicht mehr notwendig. Vorzugsweise kann das Fluid ein Schmierstoff sein. Ein Schmierstoff kann beispielsweise ein Öl sein. Der Schmierstoff, insbesondere das Öl, kann beispielsweise einen elektrisch leitenden Zusatz oder elektrisch leitende Zusätze umfassen. Ein solcher elektrisch leitender Zusatz kann beispielsweise Graphit sein. Somit kann in vorteilhafter Weise eine Doppelfunktion bewirkt sein: eine Schmierung durch den Schmierstoff und eine elektrische Verbindung aufgrund der elektrisch leitenden Zusätze (der Singular soll mitgelesen werden). Dies ist insbesondere vorteilhaft bei Laufrollen aus Metall. Denn hier muss in der Regel ein Schmierstoff verwendet werden. Da aber üblicherweise ab einer Mindestgeschwindigkeit die Laufrollen aus Metall auf dem Schmierstoff gleiten werden, besteht in diesem Fall keine direkte Verbindung mehr zwischen der Laufrolle und der Lauffläche; der Schmierstoff ist dazwischen angeordnet. Eine elektrische Verbindung ist aber in diesem Fall dennoch aufgrund der elektrisch leitenden Zusätze oder des elektrisch leitenden Zusatzes bewirkt.

Nach einer anderen Ausführungsform der Erfindung kann vorgesehen sein, dass mehrere Wagen vorgesehen sind. Die Wagen können insbesondere gleich oder vorzugsweise unterschiedlich gebildet sein.

Nach einer weiteren Ausführungsform der Erfindung kann vorgesehen sein, dass der Wagen mehrere Laufrollen aufweist. Die Laufrollen können insbesondere gleich oder vorzugsweise unterschiedlich gebildet sein.

Nach einer weiteren Ausführungsform der Erfindung kann vorgesehen sein, dass mehrere elektrische Kontakteinrichtungen vorgesehen sind. Die elektrischen Kontakteinrichtungen können beispielsweise gleich oder vorzugsweise unterschiedlich gebildet sein.

Nach der Erfindung ist eine mit der Führungsschiene elektrisch verbundene elektrisch leitende Kontaktfläche vorgesehen, wobei die elektrische Kontakteinrichtung zumindest ein am Wagen angeordnetes elektrisch leitendes Bauteil umfasst, das mit dem Wagen elektrisch verbunden und ausgebildet ist, während des geführten Verlagerns die Kontaktfläche elektrisch zu kontaktieren. Das heißt also insbesondere, dass das Bauteil eine elektrische Verbindung zwischen dem Wagen und der Führungsschiene bildet.

Somit ist also in vorteilhafter Weise ein Abfluss von Ladungsträgern über das Bauteil analog zu einem Blitzableiter oder einer Erdung auf die Führungsschiene ermöglicht. In dieser Ausführungsform kann insbesondere in vorteilhafter Weise auf ein Fluid, insbesondere einen Schmierstoff, verzichtet werden. Denn die Ableitung der Ladungsträger geschieht hier insbesondere mittels des Bauteils. Dies ist besonders vorteilhaft in der Lebensmittelindustrie und/oder in der Medizin- oder Pharmazietechnik. Hier sind in der Regel Fluide aufgrund einer Möglichkeit einer Verunreinigung nicht erwünscht oder erlaubt. Sofern aber der konkrete Anwendungsfall Fluide erlaubt, kann zusätzlich zum Bauteil noch ein elektrisch leitendes Fluid, wie insbesondere vorstehend beschrieben, vorgesehen sein. Dann ist in vorteilhafter Weise eine besonders zuverlässige elektrische Verbindung bewirkt: eine Doppelverbindung. Dies ist besonders effizient und besonders effektiv. Es wird also eine Redundanz hinsichtlich der elektrischen Verbindung zwischen Wagen und Führungsschiene bewirkt.

Nach einer Ausführungsform der Erfindung kann vorgesehen sein, dass zwischen dem Bauteil und dem Wagen eine Feder zum Beaufschlagen des Bauteils mit einer Federkraft vorgesehen ist, so dass das Bauteil mittels der Federkraft an die Kontaktfläche während der Führung gedrückt ist.

Das Bauteil wird also in vorteilhafter Weise mit einem definierten Anpressdruck gegen die Kontaktfläche gedrückt. Selbst wenn aufgrund einer Erschütterung oder einer Vibration sich ein Abstand zwischen der Kontaktfläche und dem Bauteil ändern sollte, wird diese Abstandsänderung durch die Feder kompensiert werden. Somit ist also in vorteilhafter Weise eine besonders zuverlässige elektrische Verbindung bewirkt.

Nach einer weiteren Ausführungsform der Erfindung kann vorgesehen sein, dass der Wagen eine Ausnehmung umfasst, in welcher die Feder aufgenommen ist. Dadurch wird also in vorteilhafter Weise eine besonders sichere Halterung oder Anordnung der Feder bewirkt.

Nach noch einer Ausführungsform der Erfindung kann vorgesehen sein, dass das Bauteil an einer Laufachse der Laufrolle befestigt ist. Dadurch kann eine besonders effiziente Anordnung des Bauteils an dem Wagen bewirkt werden, insofern für das Bauteil kein gesonderter Befestigungsbereich an dem Wagen bereitgehalten werden muss. Darüber hinaus ist ein Abstand zwischen einer Laufachse der Laufrolle und der Führungsschiene im Verhältnis zu anderen Bereichen des Wagens geringer, sodass hier das Bauteil entsprechend kleiner ausgebildet sein kann. Dadurch kann also in vorteilhafter Weise Material eingespart werden.

Nach der Erfindung ist vorgesehen, dass der Wagen mehrere Laufrollen aufweist und die Führungsschiene entsprechende Laufflächen umfasst, wobei ein Kontaktpunkt des Bauteils mit der Kontaktfläche während der geführten Verlagerung einem mehreckigen Bereich gegenüberliegt, dessen Ecken jeweils durch einen Mittelpunkt der jeweiligen Laufachsen der Laufrollen gebildet sind. Bei drei Laufrollen ist als mehreckiger Bereich somit ein Dreieck gebildet, insbesondere ein gleichschenkliges Dreieck.

Durch diese Anordnung ist in vorteilhafter Weise bewirkt, dass der Kontaktpunkt bei einer Verlagerung des Wagens entlang der Führungsschiene eine definierte Bahn durchläuft. Insbesondere bei Kurvenfahrten sind Beschleunigungskräfte auf das Bauteil verringert. Ferner führen Unebenheiten der Lauffläche oder Verschmutzungen nicht mehr zu erheblichen Auslenkungen des Bauteils. Hebelwirkungen auf das Bauteil während der Verlagerung werden vermindert.

Der Kontaktpunkt ist dabei dem geometrischen Schwerpunkt des mehreckigen Bereichs gegenüberliegend angeordnet. Bei dieser speziellen Anordnung wirkt kein Hebel auf das Bauteil. Insbesondere wirken keine zusätzlichen Beschleunigungskräfte während einer Kurvenfahrt auf das Bauteil. Zudem führen Unebenheiten der Lauffläche und Verschmutzungen nicht mehr zu unnötig großen Auslenkungen des Bauteils. Insbesondere ragt der Kontaktpunkt nicht mehr in die Lauffläche hinein bei einer Kurvenfahrt. Eine Anordnung des Kontaktpunkts dahingehend, dass dieser dem geometrischen Schwerpunkt des mehreckigen Bereichs gegenüberliegt, führt insbesondere zu einer Bahn auf der Führungsschiene, die auch bei Kurvenfahrten des Wagens immer auf einem konstanten Abstand zu den Laufbahnen und Laufflächen der Laufrollen liegt.

Nach einer anderen Ausführungsform der Erfindung kann vorgesehen sein, dass eine Fluidabflusseinrichtung vorgesehen ist, über die ein auf einer Führungsschienenoberfläche fließendes Fluid abfließen kann, bevor es auf die Kontaktfläche fließt.

Über die Fluidabflusseinrichtung kann in vorteilhafter Weise ein Fluid abfließen, insbesondere ein Schmierstoff, zum Beispiel ein Öl. Dadurch kann in vorteilhafter Weise die Kontaktfläche vor Verunreinigungen durch das Fluid geschützt werden. Dies könnte sonst zu einer verschlechterten elektrischen Leitfähigkeit führen. Somit kann also insbesondere in vorteilhafter Weise ein Schmierstoff, insbesondere ein Öl, zur Schmierung zwischen Laufrollen und Führungsschiene verwendet werden, ohne dass dadurch eine elektrische Verbindung beeinträchtigt werden wird. Denn der Schmierstoff fließt in vorteilhafter Weise über die Fluidabflusseinrichtung ab. Zum Beispiel kann die Fluidabflusseinrichtung ein oder mehrere Löcher oder Ablaufbohrungen umfassen. Diese sind beispielsweise an der Führungsschiene vorgesehen oder angeordnet, zum Beispiel in einer unmittelbaren Umgebung der Kontaktfläche.

Nach einer weiteren Ausführungsform der Erfindung kann vorgesehen sein, dass eine Fluidbarriereeinrichtung zum Schützen der Kontaktfläche vor einem auf einer Führungsschienenoberfläche fließenden Fluid vorgesehen ist.

Somit kann in vorteilhafter Weise eine Benetzung der Kontaktfläche mit Fluid verringert oder vermieden werden. Eine elektrische Verbindung wird somit in vorteilhafter Weise nicht oder allenfalls nur minimal beeinflusst. Ladungsträger können somit in vorteilhafter Weise weiterhin trotz Verwendung eines Fluids, zum Beispiel zur Schmierung, abfließen. Die Fluidbarriereeinrichtung wirkt also in vorteilhafter Weise als eine Fluidbarriere analog zu einem Deich.

Nach einer weiteren Ausführungsform der Erfindung kann vorgesehen sein, dass die Fluidbarriereeinrichtung einen Oberflächenvorsprung der Führungsschienenoberfläche umfasst.

Der Oberflächenvorsprung ist vorzugsweise integral mit der Führungsschiene gebildet. Die Führungsschiene und der Oberflächenvorsprung bilden also vorzugsweise ein gemeinsames Bauteil. Somit kann der Oberflächenvorsprung direkt bei der Herstellung der Führungsschiene gebildet werden. Ein Oberflächenvorsprung ist eine besonders einfache Möglichkeit einer Fluidbarriere.

In einer anderen Ausführungsform der Erfindung ist der Oberflächenvorsprung als ein von der Führungsschiene separates Bauteil gebildet. In dieser Ausführungsform wird das separate Bauteil an der Führungsschiene angeordnet oder befestigt. Dies insbesondere derart, dass das Bauteil in direktem Kontakt mit der Führungsschienenoberfläche ist. Der Vorteil eines separaten Bauteils liegt insbesondere darin, dass auch eine bestehende Transportvorrichtung mit einer Fluidbarriereeinrichtung nachgerüstet werden kann.

In einer weiteren Ausführungsform der Erfindung können mehrere Oberflächenvorsprünge gebildet sein. Insbesondere können diese gleich oder vorzugsweise unterschiedlich gebildet sein. Insbesondere kann zumindest einer der mehreren Oberflächenvorsprünge als mit der Führungsschiene integrales Bauteil gebildet sein, wobei zumindest ein weiterer der mehreren Oberflächenvorsprünge als ein von der Führungsschiene separates oder getrenntes Bauteil gebildet ist.

In einer weiteren Ausführungsform der Erfindung können Abflussbohrungen oder Löcher einer Fluidabflusseinrichtung an dem Oberflächenvorsprung gebildet sein.

Gemäß einer weiteren Ausführungsform der Erfindung kann vorgesehen sein, dass der Oberflächenvorsprung eine Schwalbenschwanzform aufweist und die Kontaktfläche eine von der Führungsschienenoberfläche abgewandte Oberfläche der Schwalbenschwanzform ist.

Eine Schwalbenschwanzform ist aufgrund ihrer speziellen Form besonders als Fluidbarriere geeignet. Denn das Fluid wird insbesondere in vorteilhafter Weise im Verbindungsbereich Schwalbenschwanz - Führungsschienenoberfläche aufgenommen. Also findet die Aufnahme insbesondere im Winkel, der mittels der Seite des Schwalbenschwanzes, der direkt die Oberfläche berührt oder angrenzt, und der Oberfläche gebildet wird, statt, wobei dieser Winkel in der Regel ein spitzer Winkel ist. Das Fluid wird in der Regel nicht gegen diesen spitzen Winkel hin zur Kontaktfläche fließen können. Die Schwerkraft wirkt hier dem Fließen des Fluids entgegen. Dies insbesondere abhängig von der konkreten Anordnung der Transportvorrichtung im Raum.

Nach einer weiteren Ausführungsform der Erfindung kann vorgesehen sein, dass die Fluidbarriereeinrichtung eine separat von der Führungsschiene gebildete Leiste umfasst, die beabstandet von der Führungsschienenoberfläche an der Führungsschiene angeordnet und mit der Führungsschiene elektrisch verbunden ist, wobei die Kontaktfläche eine Oberfläche der Leiste ist.

Aufgrund des Abstands zwischen der Leiste und der Führungsschienenoberfläche kann in vorteilhafter Weise ein Fluid ungehindert über die gesamte Führungsschienenoberfläche fließen, ohne jedoch hierbei die Kontaktfläche zu benetzen. Es kann also ein Fluid zwecks Schmierung verwendet werden. Dennoch ist eine elektrische Verbindung zwischen Wagen und Führungsschiene bewirkt. Beispielsweise kann die Leiste mittels Schrauben an die Führungsschiene angeschraubt werden oder sein. Es kann beispielsweise ein Abstandshalter, zum Beispiel eine Hülse, zwischen der Leiste und der Führungsschienenoberfläche vorgesehen sein. Insbesondere können mehrere Abstandshalter vorgesehen sein. Die elektrische Verbindung kann insbesondere über die Schraube oder über die Schrauben bewirkt werden.

Nach einer weiteren Ausführungsform der Erfindung kann vorgesehen sein, dass mehrere elektrisch leitende Bauteile vorgesehen sind, die jeweils am Wagen angeordnet sind. Die Bauteile können beispielsweise gleich oder vorzugsweise unterschiedlich gebildet sein.

Dadurch ist in vorteilhafter Weise eine Redundanz hinsichtlich der elektrischen Kontaktierung bewirkt. Selbst wenn eines der Bauteile zeitweise keinen Kontakt zur Kontaktfläche haben sollte, so werden in der Regel die anderen Bauteile noch Kontakt haben. Ein Gesamtwiderstand der elektrischen Verbindung, die durch die mehreren Bauteile gebildet wird, ist in vorteilhafter Weise kleiner als im Fall eines einzigen Bauteils. Somit kann in vorteilhafter Weise eine bessere elektrische Leitfähigkeit bewirkt werden. Dies bewirkt in vorteilhafter Weise eine verbesserte Ableitung der auf der Oberfläche des Wagens gebildeten elektrischen Ladungsträger.

Nach noch einer Ausführungsform der Erfindung kann vorgesehen sein, dass das Bauteil einen Kontaktarm, insbesondere mehrere Kontaktarme, für die elektrische Kontaktierung aufweist. Das heißt also insbesondere, dass die elektrische Verbindung zwischen dem Wagen und der Führungsschiene mittels des Kontaktarms oder mittels der Kontaktarme bewirkt oder gebildet ist.

Bei mehreren Kontaktarmen kann einer der Kontaktarme ohne größeren Nachteil den Kontakt verlieren, beispielsweise aufgrund von Vibrationen, ohne dass das Bauteil als Ganzes den elektrischen Kontakt verliert. Denn der elektrische Kontakt kann über den weiteren Kontaktarmen aufrecht erhalten werden. Somit ist in vorteilhafter Weise eine Redundanz hinsichtlich der elektrischen Kontaktierung bewirkt. Die Kontaktarme können beispielsweise als Federelemente ausgebildet sein.

Gemäß einer weiteren Ausführungsform der Erfindung kann vorgesehen sein, dass das Bauteil als Federelement ausgebildet ist.

Die entsprechenden Vorteile dieser Ausführungsform sind analog zu der Ausführungsform mit der Feder. Es wird hier der Anpressdruck mittels des Bauteils selbst bewirkt. Somit ist in vorteilhafter Weise keine separate Feder mehr notwendig. Dadurch kann Material eingespart werden.

Nach einer anderen Ausführungsform der Erfindung kann vorgesehen sein, dass die Kontaktfläche mittels einer elektrisch leitenden Schicht beschichtet ist.

Durch das Vorsehen der Schicht kann je nach Material oder Materialzusammensetzung der Schicht eine verbesserte elektrische Leitfähigkeit bewirkt werden. Die Schicht kann somit in vorteilhafter Weise als Schutzschicht wirken und insbesondere als solche bezeichnet werden. Beispielsweise kann die Schutzschicht eine Korrosionsschutzschicht sein, also korrosionsschützende Eigenschaften aufweisen, also insbesondere korrosionsschützende Materialien umfassen. Als Material für die Schicht kann beispielsweise Gold und/oder Nickel vorgesehen sein. Das heißt also insbesondere, dass die Kontaktfläche vergoldet und/oder vernickelt sein kann. Die Schicht kann insbesondere Gold und/oder Nickel umfassen. Somit kann die Transportvorrichtung in vorteilhafter Weise auch in Umgebungen eingesetzt werden, die aggressive und oberflächenschädigende Umgebungsbedingungen aufweisen wie zum Beispiel eine säurehaltige Umgebungsatmosphäre.

Nach einer weiteren Ausführungsform kann vorgesehen sein, dass das Bauteil eine Antistatikbürste ist. Eine Antistatikbürste weist insbesondere mehrere Bürstenhaare und/oder Bürstenfasern auf, die elektrisch leitfähig sind. Die Bürstenhaare und/oder die Bürstenfasern kontaktieren während der Führung die Kontaktfläche. Über die mehreren Bürstenhaare und/oder Bürstenfasern ist also in vorteilhafter Weise eine Mehrfachkontaktierung bewirkt. Dadurch ist somit in vorteilhafter Weise eine Redundanz hinsichtlich einer elektrischen Kontaktierung geschaffen. Die Bürstenhaare und/oder die Bürstenfasern können beispielsweise aus Carbon gebildet sein oder Carbon umfassen. Als Oberbegriff für die Bürstenhaare und/oder die Bürstenfasern kann vorzugsweise der Begriff Borsten verwendet werden.

Nach einer anderen Ausführungsform der Erfindung kann vorgesehen sein, dass die Antriebsvorrichtung einen Linearmotor umfasst.

Ein Linearmotor im Sinne der vorliegenden Erfindung entspricht insbesondere einer linearen Ausführung einer rotierenden Maschine aufweisend ein bestrombares Primärteil, das einem Stator eines Rotationsmotors vergleichbar ist, und ein Sekundärteil, das einem Rotor des Rotationsmotors entspricht. Bei Linearmotoren kann insbesondere zwischen Asynchron- und Synchronmotoren unterschieden werden, wobei bei der asynchronen Bauweise das Sekundärteil mit Kurzschlussstäben bestückt ist, beim Synchronmotor dagegen aus Permanentmagneten (auch Dauermagneten genannt) besteht. Synchronmotoren weisen insbesondere den Vorteil auf, dass sie einen hohen Wirkungsgrad und hohe Dauervorschubkräfte aufweisen. Linearmotoren im Sinne der vorliegenden Erfindung können insbesondere zur Erzeugung von translatorischen Vorschubbewegungen oder Verlagerungen verwendet werden. Im Lichte der vorstehenden Ausführungen kann ein Linearmotor im Sinne der vorliegenden Erfindung insbesondere eine Statorvorrichtung (das bestrombare Primärteil) und ein Reaktionsteil (das Sekundärteil) umfassen. Das Reaktionsteil oder das Sekundärteil kann insbesondere am Wagen angeordnet sein.

Es findet somit in vorteilhafter Weise eine Wechselwirkung zwischen dem Sekundärteil oder Reaktionsteil am Wagen und dem Primärteil, also der Statorvorrichtung, statt. Diese Wechselwirkung führt zu einer Verlagerung des Wagens. Hierbei wird der Wagen mittels der Führungsschiene geführt, wobei die Laufrollen während der Verlagerung auf der Lauffläche der Führungsschiene abrollen können.

Nach einer Ausführungsform kann das Transportsystem analog zu den in den deutschen Patentanmeldungen DE 10 2012 204 916.9 und DE 10 2012 204 919.3 beschriebenen Transportsystemen gebildet sein. Der Offenbarungsgehalt dieser beiden Patentanmeldungen ist hier vollumfänglich einbezogen. Dort wurden die Transportsysteme lineare Transportsysteme genannt, da sie einen Linearmotor umfassen. Der Wagen im Rahmen dieser Anmeldung entspricht dem Fahrzeug in den beiden vorstehend genannten deutschen Patentanmeldungen. Ein Transportsystem umfassend einen Linearmotor kann allgemein insbesondere als lineares Transportsystem bezeichnet werden.

In einer Ausführungsform der Erfindung umfasst der Linearmotor eine Statorvorrichtung. Die Statorvorrichtung umfasst beispielsweise eine erste Leiterplatte und eine zweite Leiterplatte, welche parallel zueinander und gegenüberliegend angeordnet sind. Die beiden Leiterplatten weisen beispielsweise mehrere Aussparungen auf. Hierbei ist vorzugsweise eine jeweilige Aussparung der ersten Leiterplatte einer jeweiligen Aussparung der zweiten Leiterplatte gegenüberliegend gebildet. Das heißt also insbesondere, dass die Aussparungen der beiden Leiterplatten jeweils gegenüberliegend angeordnet sind.

Zwischen den beiden Leiterplatten der Statorvorrichtung sind vorzugsweise mehrere Spulen angeordnet. Die Spulen sind beispielsweise jeweils um einen Statorzahn gewickelt, welcher vorzugsweise in zwei gegenüberliegende Aussparungen der beiden Leiterplatten gesteckt ist. Eine elektrische Kontaktierung der Spulen erfolgt beispielsweise mittels zumindest einer der beiden Leiterplatten, insbesondere mittels beider Leiterplatten. Das heißt also insbesondere, dass die Spulen beispielsweise mit den beiden Leiterplatten (oder nur einer Leiterplatte) elektrisch kontaktiert sind.

Unterhalb der Aussparungen, also unterhalb der Spulen, ist vorzugsweise ein Profilelement vorgesehen, welches beispielsweise parallel zu der Führungsschiene verläuft. Es sind beispielsweise Schrauben vorgesehen, mittels welcher die beiden Leiterplatten sowohl mit der Führungsschiene als auch mit dem Profilelement befestigt oder angeschraubt sind. Hierfür weisen die beiden Leiterplatten vorzugsweise entsprechende Löcher auf.

Sowohl die Führungsschiene als auch das Profilelement stützen somit in vorteilhafter Weise die beiden Leiterplatten und bewirken in vorteilhafter Weise insbesondere eine mechanische Stabilisierung der Statorvorrichtung.

Unterhalb des Profilelements ist beispielsweise ein Trägerprofilelement gebildet, auf welchem vorzugsweise das Profilelement angeordnet oder befestigt ist. Das heißt also insbesondere, dass das Trägerprofilelement die Statorvorrichtung trägt. In einer Ausführungsform kann vorgesehen sein, dass das Profilelement und das Trägerprofilelement als ein gemeinsames Profilelement gebildet sind.

Nach einer Ausführungsform der Erfindung kann vorgesehen sein, dass die Führungsschiene oberhalb der Statorvorrichtung angeordnet ist.

In einer Ausführungsform der Erfindung kann vorgesehen sein, dass die Führungsschiene seitlich neben der Statorvorrichtung angeordnet ist. Das heißt also insbesondere, dass die Führungsschiene seitlich neben einer der beiden Leiterplatten und angeordnet ist.

Nach einer anderen Ausführungsform der Erfindung kann vorgesehen sein, dass das elektrisch leitende Bauteil zumindest teilweise in einer Führungshülse aufgenommen ist, die am Wagen angeordnet ist. Die Führungshülse kann beispielsweise an einem Schenkel des Wagens angeordnet sein. Dies insbesondere wenn der Wagen eine U- oder C-Form aufweist. Die Führungshülse kann vorzugsweise an einer der Führungsschiene gegenüberliegenden Oberfläche des Schenkels angeordnet sein. Dies insbesondere wenn die Führungsschiene seitlich neben der Statorvorrichtung angeordnet ist. In der Führungshülse kann beispielsweise eine Feder vorgesehen sein, die zwischen dem Wagen und dem Bauteil vorgesehen ist.

In einer weiteren Ausführungsform der Erfindung kann vorgesehen sein, dass ein elektrisch leitendes Kabel vorgesehen ist, das sowohl mit dem elektrisch leitenden Bauteil als auch mit dem Wagen verbunden ist. Hierüber ist also in vorteilhafter Weise eine elektrische Verbindung zwischen Bauteil und dem Wagen bewirkt. Dadurch kann in vorteilhafter Weise eine Feder für einen Anspressdruck des Bauteils an die Kontaktfläche verwendet werden, die selbst nicht elektrisch leitend ist oder die nur eine schlechte elektrische Leitfähigkeit aufweist. Sofern die Feder selbst elektrisch leitend ist, kann beispielsweise auf das Kabel verzichtet werden. Es kann beispielsweise vorgesehen sein, dass das Kabel und die Feder elektrisch leitend sind, sodass in diesem Fall eine besonders gute elektrische Verbindung zwischen dem Bauteil und dem Wagen bewirkt ist.

Die Erfindung wird im Folgenden anhand von bevorzugten Ausführungsbeispielen näher erläutert. Hierbei zeigen
Fig. 1 ein Transportsystem,
Fig. 2 eine vergrößerte Ausschnittsansicht des Transportsystems gemäß Fig. 1,
Fig. 3 ein weiteres Transportsystem,
Fig. 4 eine vergrößerte Ausschnittsansicht des Transportsystems gemäß Fig. 3,
Fig. 5 ein anderes Transportsystem,
Fig. 6 eine vergrößerte Ausschnittsansicht des Transportsystems gemäß Fig. 5,
Fig. 7 drei Laufrollen in einer Seitenansicht,
Fig. 8 noch ein weiteres Transportsystem,
Fig. 9 ein Ablaufdiagramm eines Verfahrens zum Betreiben einer Transportvorrichtung,
Fig. 10 ein Bauteil,
Fig. 11 ein weiteres Bauteil,
Fig. 12 ein lineares Transportsystem und
Fig. 13 noch ein lineares Transportsystem.

Im Folgenden können für gleiche Merkmale gleiche Bezugszeichen verwendet werden. Des Weiteren sind der Übersicht wegen nicht immer für sämtliche Merkmale die Bezugszeichen in den Figuren eingezeichnet.

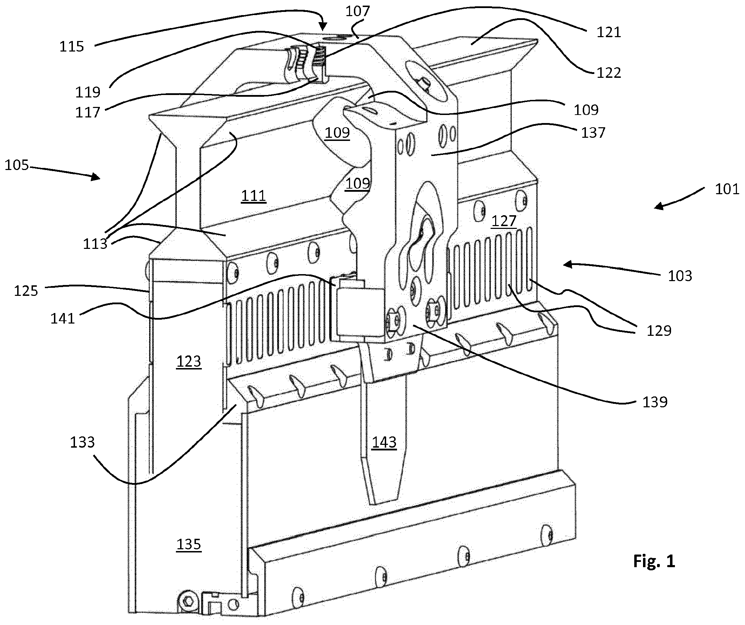

Fig. 1 zeigt ein Transportsystem 101.

Das Transportsystem 101 umfasst einen Linearmotor 103. Ferner umfasst das Transportsystem 101 eine Transportvorrichtung 105.

Die Transportvorrichtung 105 weist einen Wagen 107 auf, der insgesamt sechs Laufrollen 109 aufweist. Zu sehen sind aufgrund der perspektivischen Ansicht in Fig. 1 lediglich drei Laufrollen 109.

Ferner umfasst die Transportvorrichtung 105 eine Führungsschiene 111, die als I-Profilelement ausgebildet ist. Die Führungsschiene 111 umfasst vier Laufflächen 113 für die sechs Laufrollen 109. Auf diesen Laufflächen 113 können die Laufrollen 109 abrollen, wenn der Wagen 107 entlang der Führungsschiene 111 verlagert wird.

Des Weiteren umfasst die Transportvorrichtung 105 eine elektrische Kontakteinrichtung 115, die verschieden von den Laufrollen 109 gebildet ist. Diese elektrische Kontakteinrichtung 115 ist ausgebildet, beim mittels der Führungsschiene 111 geführten Verlagern des Wagens 107 eine elektrische Verbindung zwischen dem Wagen 107 und der Führungsschiene 111 zu bilden.

Hierfür umfasst die Kontakteinrichtung 115 ein elektrisch leitendes Bauteil 117. Zwischen dem elektrisch leitenden Bauteil 117 und dem Wagen 107 ist eine Feder 119 vorgesehen. Diese beaufschlagt das Bauteil 117 mit einer Federkraft, sodass das Bauteil 117 mittels der Federkraft an eine Kontaktfläche 122 während der Führung gedrückt ist. Die Kontaktfläche 122 ist als Oberfläche des Profilelements 111 gebildet. Die Feder 119 ist in einer Ausnehmung 121 aufgenommen, wobei die Ausnehmung 121 am Wagen 107 gebildet ist. Die Ausnehmung 121 führt die Feder 119 und das Bauteil 117.

In einer nicht gezeigten Ausführungsform kann vorgesehen sein, dass das elektrisch leitende Bauteil 117 eine Antistatikbürste ist. Die Bürstenhaare und/oder die Bürstenfasern der Antistatikbürste kontaktieren während der Führung die Kontaktfläche 122.

Des Weiteren umfasst der Linearmotor 103 eine Statorvorrichtung 123. Die Statorvorrichtung 123 umfasst eine erste Leiterplatte 125 und eine zweite Leiterplatte 127, welche parallel zueinander und gegenüberliegend angeordnet sind. Die beiden Leiterplatten 125 und 127 weisen mehrere Aussparungen 129 auf. Hierbei ist eine jeweilige Aussparung der ersten Leiterplatte 125 einer jeweiligen Aussparung 129 der zweiten Leiterplatte 127 gegenüberliegend gebildet. Das heißt also insbesondere, dass die Aussparungen 129 der beiden Leiterplatten 125 und 127 jeweils gegenüberliegend angeordnet sind.

Zwischen den beiden Leiterplatten 125 und 127 der Statorvorrichtung 123 sind mehrere Spulen angeordnet. Diese Spulen sind der Übersicht halber in Fig. 1 nicht gezeigt. Die Spulen sind jeweils um einen Statorzahn gewickelt, welcher in zwei gegenüberliegende Aussparungen 129 der beiden Leiterplatten 125 und 127 gesteckt ist. Eine elektrische Kontaktierung der Spulen erfolgt mittels zumindest einer der beiden Leiterplatten 125 und 127, insbesondere mittels beider Leiterplatten 125 und 127. Das heißt also insbesondere, dass die Spulen mit den beiden Leiterplatten 125 und 127 elektrisch kontaktiert sind.

Unterhalb der Aussparungen 129, also unterhalb der Spulen, ist ein Profilelement 133 vorgesehen, welches parallel zu dem Profilelement, also der Führungsschiene 111, verläuft.

Unterhalb des Profilelements 133 ist ein Trägerprofilelement 135 gebildet, auf welchem das Profilelement 133 angeordnet oder befestigt ist. Das heißt also insbesondere, dass das Trägerprofilelement 135 die Statorvorrichtung 123 trägt. In einer nicht gezeigten Ausführungsform kann vorgesehen sein, dass das Profilelement 133 und das Trägerprofilelement 135 als ein gemeinsames Profilelement gebildet sind. Das Trägerprofilelement 135 kann beispielsweise einen hier nicht gezeigten Hohlraum aufweisen, in welchem die beiden Leiterplatten 125 und 127 hineinragen, wobei in diesem Hohlraum, auch Einbauraum genannt, eine hier nicht gezeigte Leistungselektronik und/oder eine hier nicht gezeigte Positionserfassungselektronik eines Positionserfassungssystems angeordnet sein können.

Der Linearmotor 103 umfasst ferner zwei Dauermagnete oder Permanentmagnete 141. Diese sind am Wagen 107 angeordnet. Der Wagen 107 weist eine U- oder C-Form auf. Insofern umfasst der Wagen zwei Schenkel 137, welche parallel zueinander angeordnet sind. An einem jeweiligen Ende 139 der Schenkel 137 ist jeweils ein Dauermagnet 141 angeordnet. Somit ist ein jeweiliger Dauermagnet 141 gegenüber der Statorvorrichtung 123, hier insbesondere gegenüber den Spulen, angeordnet, wenn der Wagen 107 auf die Führungsschiene 111 gesetzt ist.

Das heißt also insbesondere, dass sich in diesem Fall, also wenn der Wagen 107 auf die Führungsschiene 111 gesetzt ist, einer der Permanentmagnete 141 rechts und der andere sich links neben den entsprechenden Leiterplatten 125, 127 befinden. Hierbei ist ein Abstand zwischen den Permanentmagneten 141 und den entsprechenden Leiterplatten 125 und 127 vorgesehen. Es ist insofern jeweils ein Spalt zwischen einem Permanentmagneten 141 und der entsprechenden Leiterplatte 125 oder 127 gebildet. Eine solche Anordnung kann daher insofern auch als eine Doppelspaltanordnung bezeichnet werden.

In einer nicht gezeigten Ausführungsform können auch mehrere Permanentmagnete 141 vorgesehen sein, welche jeweils links und rechts der entsprechenden Leiterplatten 125 und 127 am Ende 139 des Schenkels 137 angeordnet sind.

Ferner ist ein einziges Positionsdetektionselement 143 vorgesehen, welches an einem Ende 139 der beiden Schenkel 137 angeordnet ist. Dieses Positionsdetektionselement 143 verläuft verlängernd nach unten weg vom Wagen 107 in Richtung des Trägerprofilelements 135 und ist somit, wenn der Wagen 107 auf die Führungsschiene 111 gesetzt ist, gegenüber einer eventuell vorhandenen Positionserfassungssystemelektronik angeordnet. Die Positionserfassungssystemelektronik ist insbesondere dafür ausgebildet, eine Anwesenheit des Positionsdetektionselements 143 zu detektieren, sodass hierüber in vorteilhafter Weise eine Position des Wagens 107 bestimmt werden kann. Aus den gemessenen Signalen kann dann insbesondere an anderer Stelle, zum Beispiel mittels einer übergeordneten Steuerung, eine Position des Wagens 107 berechnet werden.

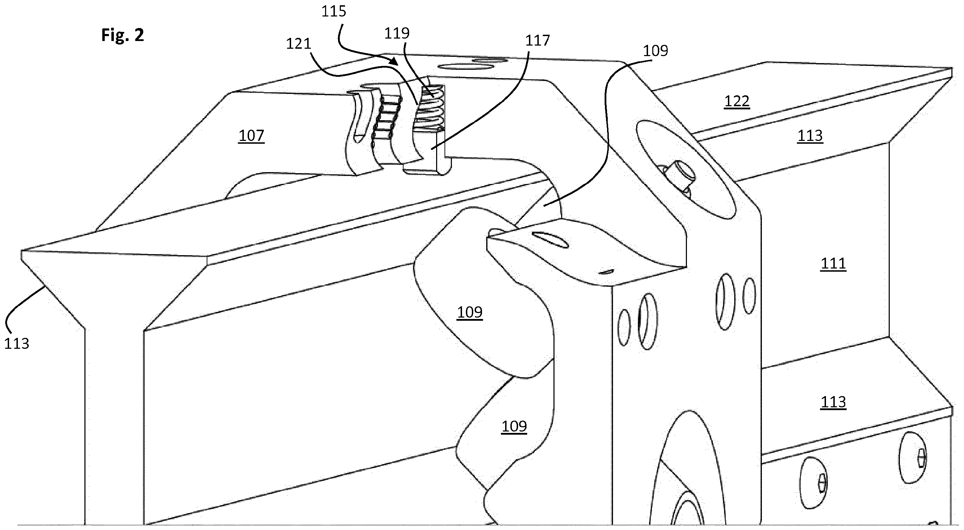

Fig. 2 zeigt eine vergrößerte Ausschnittsansicht des Transportsystems 101 gemäß Fig. 1.

Vergrößert gezeichnet ist insbesondere der obere Bereich des Wagens 107 mit dem elektrisch leitenden Bauteil 117. Die Feder 119 drückt das elektrisch leitende Bauteil 117 während der Verlagerung des Wagens 107 stets in Richtung der Kontaktfläche 122. Somit kann in vorteilhafter Weise eine zuverlässige elektrische Verbindung zwischen dem Wagen 107 und der Führungsschiene 111 bewirkt werden. Dies selbst auch dann, wenn aufgrund von Vibrationen sich ein Abstand zwischen dem Wagen 107 und der Kontaktfläche 122 ändern sollte.

Aufgrund der elektrischen Verbindung zwischen dem Wagen 107 und der Führungsschiene 111 können elektrische Ladungen, die sich während des Verlagerns auf einer Oberfläche des Wagens 107 bilden, über das elektrisch leitende Bauteil 117 auf die Führungsschiene 111 abfließen. Eine elektrostatische Aufladung des Wagens kann somit in vorteilhafter Weise vermindert oder sogar verhindert werden. Dies kann in vorteilhafter Weise einen Überschlag zwischen dem Wagen 107 und der Führungsschiene 111 verhindern. Dadurch können ferner eine Beschädigung von elektrischen Bauteilen, eine elektrische Funktionsstörung von elektrischen Bauteilen, eine Gefahr für einen Nutzer oder eine Brandgefahr vermindert oder verhindert werden. Das elektrisch leitende Bauteil 117 wirkt analog einem Blitzableiter oder einer Erdung.

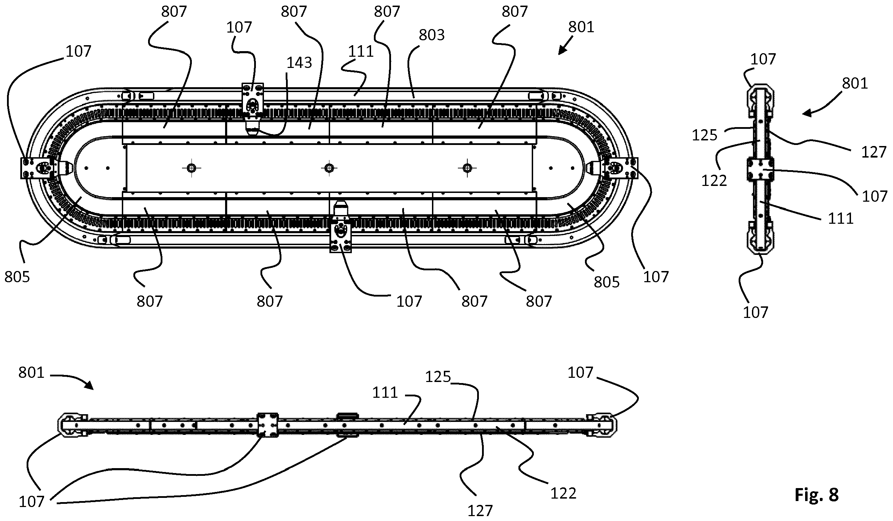

Der vorstehend beschriebene Linearmotor 103 ist insbesondere weiter in den beiden deutschen Patentanmeldungen DE 10 2012 204 916.9 und DE 10 2012 204 919.3 beschrieben. Dort insbesondere im Zusammenhang mit der Figur 8.

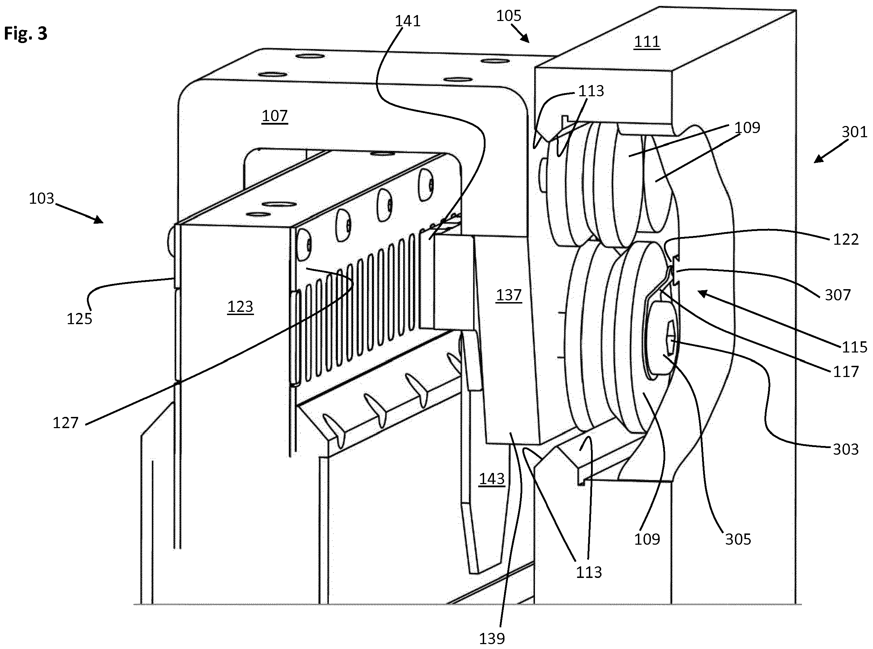

Fig. 3 zeigt ein weiteres Transportsystem 301.

Bei dem Transportsystem 301 ist die Führungsschiene 111 nicht oberhalb der Statorvorrichtung 123 angeordnet, sondern seitlich neben der Statorvorrichtung 123. Das heißt also insbesondere, dass die Führungsschiene 111 seitlich neben einer der beiden Leiterplatten 125 und 127 angeordnet ist. Im gezeigten Ausführungsbeispiel gemäß Fig. 3 ist die Führungsschiene 111 rechts neben der Leiterplatte 127 vorgesehen.

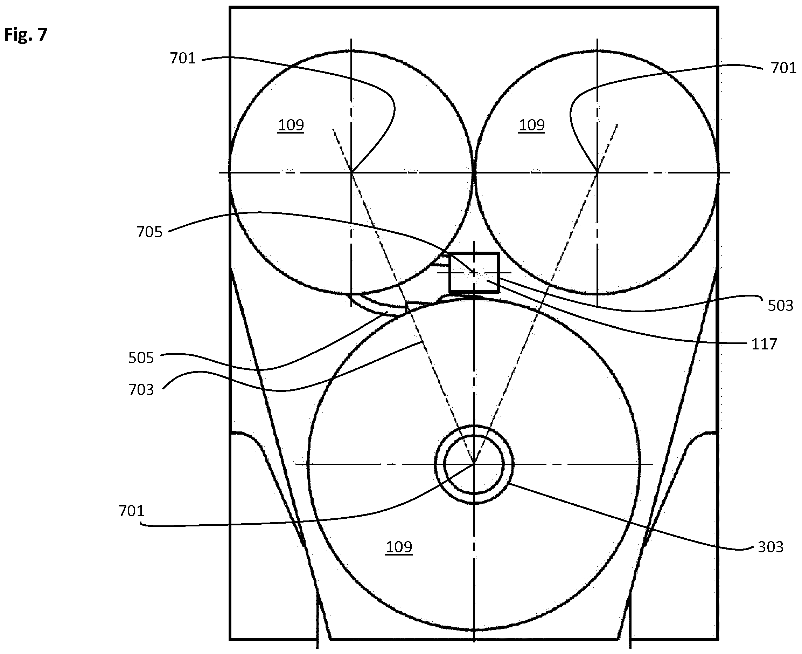

Der Wagen 107 umfasst in dem Transportsystem 301 drei Laufrollen 109, welche auf entsprechend gebildete Laufflächen 113 der Führungsschiene 111 abrollen können. Hierbei sind zwei Laufrollen nebeneinander und über der dritten Laufrolle 109 angeordnet. In einer seitlichen Ansicht würden die Laufachsen 303 Ecken eines gleichschenkligen Dreiecks bilden (vgl. Fig. 7).

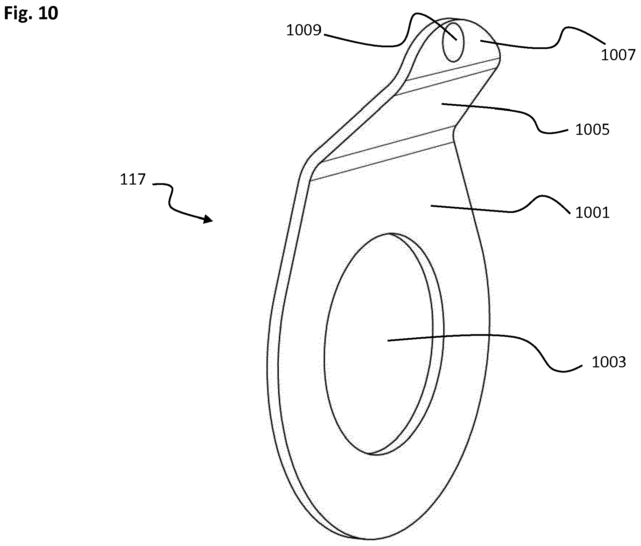

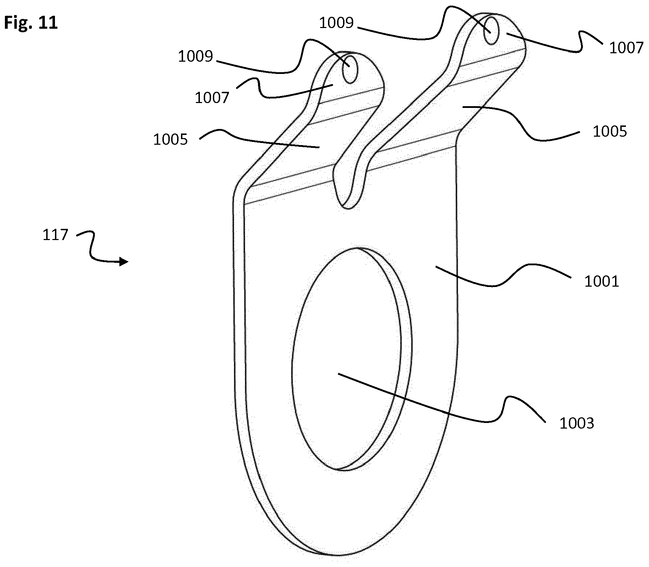

An einer Laufachse 303 der unteren Laufrolle 109 ist ein elektrisch leitendes Bauteil 117 befestigt. Dies insbesondere mittels einer Schraube 305. Das Bauteil 117 ist als Federelement gebildet (vgl. Fig. 10 und 11) und liegt mit einem Ende an einer Oberfläche eines Oberflächenvorsprungs 307 der Führungsschiene 111 an. Diese Oberfläche des Oberflächenvorsprungs 307 bildet insofern die Kontaktfläche 122. Der Oberflächenvorsprung 307 weist eine Schwalbenschwanzform auf, wobei die Kontaktfläche 122 die von der Führungsschienenoberfläche abgewandte Oberfläche der Schwalbenschwanzform ist. Vorzugsweise kann diese Kontaktfläche 122 des Oberflächenvorsprungs 307 vergoldet und/oder vernickelt sein. In einem weiteren nicht gezeigten Ausführungsbeispiel kann der Oberflächenvorsprung 307 Abflussbohrungen aufweisen, mittels welcher ein Fluid, beispielsweise ein Schmierstoff, abfließen kann. Dadurch kann in vorteilhafter Weise eine Benetzung der Kontaktfläche 122 mit solch einem Fluid vermieden werden.

Dadurch, dass das Bauteil 117 als Federelement ausgebildet ist, wird das eine Ende des Bauteils stets mit einem vorbestimmten Anpressdruck an die Kontaktfläche 122 gedrückt. Selbst wenn sich ein Abstand zwischen der unteren Laufrolle 109 und der Führungsschiene 111 ändern sollte, so bleibt der elektrische Kontakt zwischen dem Bauteil 117 und der Kontaktfläche 122 in vorteilhafter Weise erhalten.

In einer nicht gezeigten Ausführungsform kann vorgesehen sein, dass das elektrisch leitende Bauteil 117 eine Antistatikbürste ist. Die Antistatikbürste kontaktiert mittels ihrer Bürstenhaare und/oder Bürstenfasern die Kontaktfläche 122. Die Antistatikbürste ist insbesondere an der Laufachse 303 befestigt.

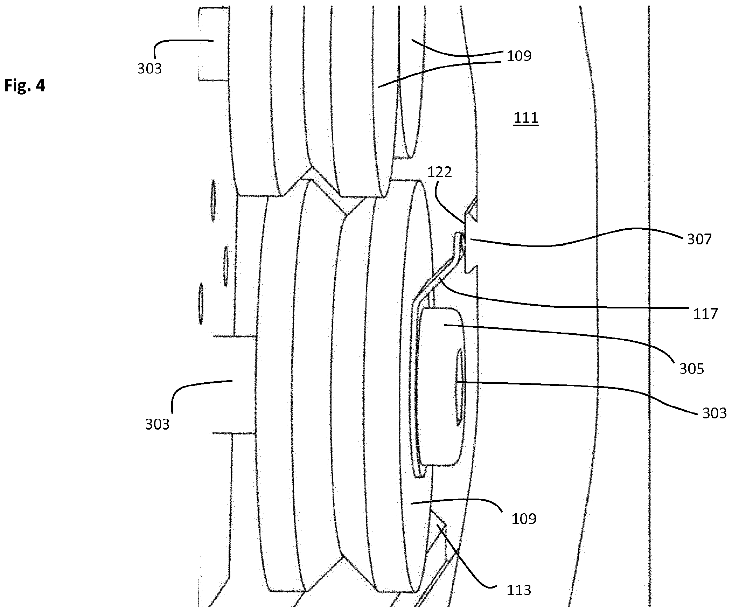

Fig. 4 zeigt eine vergrößerte Ausschnittsansicht der unteren Laufrolle 109 gemäß Fig. 3.

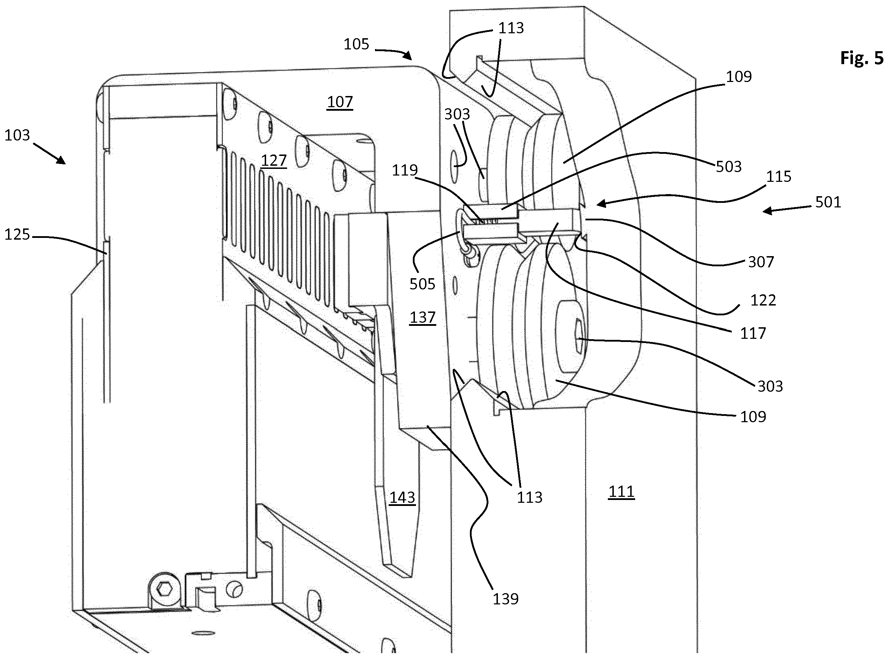

Fig. 5 zeigt ein anderes Transportsystem 501.

In diesem Ausführungsbeispiel weist der Wagen 107 analog zu dem Aufbau gemäß Fig. 3 drei Laufrollen 109 (vgl. Fig. 7) auf, von denen der Übersichtlichkeit halber jedoch nur die eine untere Laufrolle 109 und die hintere obere Laufrolle 109 der beiden oberen Laufrollen 109 dargestellt sind. Ebenfalls analog zu dem Ausführungsbeispiel gemäß Fig. 3 ist die Führungsschiene 111 rechts neben der zweiten Leiterplatte 127 angeordnet. Das elektrisch leitende Bauteil 117 ist zumindest teilweise in einer Führungshülse 503 aufgenommen, die am Schenkel 137 angeordnet ist. Und hier genauer an einer der Führungsschiene 111 gegenüberliegenden Oberfläche des Schenkels 137. In der Führungshülse 503 ist ferner eine Feder 119 vorgesehen, die zwischen dem Wagen 107 und dem Bauteil 117 vorgesehen ist. Dadurch kann also in vorteilhafter Weise die Feder 119 das Bauteil 117 mit einer vorbestimmten Federkraft beaufschlagen, sodass das elektrisch leitende Bauteil 117 mit einem vorbestimmten Anpressdruck an die Kontaktfläche 122 gepresst oder gedrückt wird. Hierbei ist die Kontaktfläche 122 analog zu dem Ausführungsbeispiel gemäß Fig. 3 als eine Oberfläche eines Oberflächenvorsprungs 307 gebildet, der eine Schwalbenschwanzform aufweist.

Darüber hinaus ist ein elektrisch leitendes Kabel 505 vorgesehen, das sowohl mit dem elektrisch leitenden Bauteil 117 als auch mit dem Wagen 107 verbunden ist. Hierüber ist also in vorteilhafter Weise eine elektrische Verbindung zwischen Bauteil 117 und dem Wagen 107 bewirkt. Dadurch kann in vorteilhafter Weise eine Feder 119 verwendet werden, die selbst nicht elektrisch leitend ist oder die nur eine schlechte elektrische Leitfähigkeit aufweist. Sofern die Feder 119 selbst elektrisch leitend ist, kann beispielsweise auf das Kabel 505 verzichtet werden. Es kann beispielsweise vorgesehen sein, dass das Kabel 505 und die Feder 119 elektrisch leitend sind, sodass in diesem Fall eine besonders gute elektrische Verbindung zwischen dem Bauteil 117 und dem Wagen 107 bewirkt ist.

In einer nicht gezeigten Ausführungsform kann vorgesehen sein, dass das elektrisch leitende Bauteil 117 eine Antistatikbürste ist. Die Antistatikbürste kontaktiert mittels ihrer Bürstenhaare und/oder Bürstenfasern die Kontaktfläche 122. Die Antistatikbürste ist insbesondere in der Führungshülse aufgenommen, wobei aufgrund der Federkraft die Bürstenhaare und/oder Bürstenfasern an die Kontaktfläche 122 gedrückt werden.

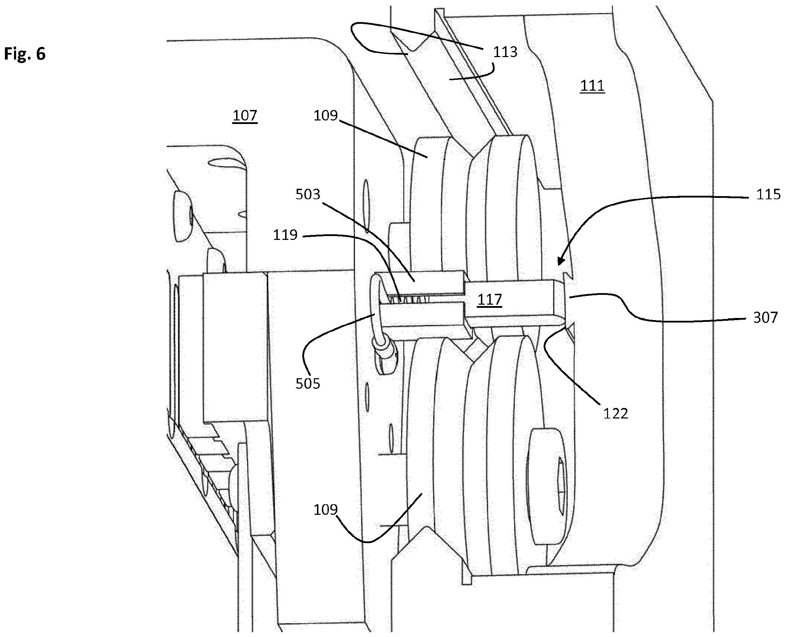

Fig. 6 zeigt eine vergrößerte Ausschnittsansicht der unteren Laufrolle 109 gemäß Fig. 5.

Fig. 7 zeigt die drei Laufrollen 109 gemäß dem in Fig. 5 gezeigten Ausführungsbeispiel in einer Seitenansicht. Obwohl sich das Transportsystem 501 gemäß Fig. 5 von dem Transportsystem 301 gemäß Fig. 3 in der Art des Bauteils 117 unterscheidet, so ist die Anordnung der drei Laufrollen 109 in beiden Ausführungsformen gleich.

Ein jeweiliger Mittelpunkt der Laufrollen 109 (und damit der entsprechenden Laufachsen) ist mit dem Bezugszeichen 701 gekennzeichnet. Die drei Mittelpunkte 701 bilden also ein Dreieck 703, wobei die drei Laufrollen 109 derart angeordnet sind, dass die drei Mittelpunkte 701 ein gleichschenkliges Dreieck bilden. Der geometrische Schwerpunkt des gleichschenkligen Dreiecks 703 ist mit dem Bezugszeichen 705 gekennzeichnet. Das Bauteil 117 ist mit dem geometrischen Schwerpunkt 705 fluchtend angeordnet. Ein Kontaktpunkt des Bauteils 117 mit der Kontaktfläche 122 ist aufgrund dieser fluchtenden Anordnung dem geometrischen Schwerpunkt 705 gegenüberliegend angeordnet.

Das Prinzip, dass der Kontaktpunkt des Bauteils 117 mit der Kontaktfläche 122 dem geometrischen Schwerpunkt des mehreckigen Bereichs, der mittels der Mittelpunkte der Laufrollen oder Laufachsen gebildet ist, gegenüberliegt, lässt sich auf eine beliebige Anzahl von Laufrollen übertragen. Die Anzahl kann beispielsweise 2, 3, 4, 5, 6, 7 oder 8 betragen.

Fig. 8 zeigt ein Transportsystem 801, welches beispielsweise analog zu dem Transportsystem 101 aus Fig. 1 ausgebildet ist oder mehrere solcher Transportsysteme 101 umfasst. Hierbei sind dann die entsprechenden einzelnen Bestandteile verlängert oder mit entsprechend gleich gebildeten Transportsystemen verbunden, sodass die in Fig. 8 gezeigte Führungsbahn 803 aufgebaut werden kann.

Die linke obere Zeichnung in Fig. 8 zeigt eine Seitenansicht des Transportsystems 801. Die untere Zeichnung in Fig. 8 zeigt eine Draufsicht auf das Transportsystem 801. Die rechte obere Zeichnung in Fig. 8 zeigt eine seitliche Schnittansicht.

Das Transportsystem 801 umfasst mehrere Linearmotoren 805 und 807, die entsprechend der Führungsbahn 803 geformt sind. So sind zwei bogenförmige Linearmotoren 805 vorgesehen, die gegenüberliegend angeordnet sind. Um die beiden bogenförmigen Linearmotoren 805 zu verbinden, so dass die Führungsbahn 803 gebildet werden kann, sind mehrere geradlinige Linearmotoren 807 vorgesehen. Die Linearmotoren 805 sind im Aufbau im Wesentlichen analog zu dem Linearmotor 103 gebildet, nur sind die Formen und Dimensionen der einzelnen Bestandteile der Linearmotoren 805 an die Bogenform angepasst. Die Linearmotoren 807 sind analog zum Linearmotor 103 gebildet. Die jeweiligen Führungsschienen bilden somit die Führungsbahn 803 für die Wagen 107.

Die einzelnen Linearmotoren 805 und 807 können unabhängig voneinander betrieben werden. Das heißt also insbesondere, dass jeder der Linearmotoren 805 und 807 unabhängig von den anderen Linearmotoren angesteuert werden kann, so dass jeder Linearmotor eine eigene Antriebskraft oder Bremskraft auf einen oder mehrere Wagen 107 aufbringen kann. Jeder Linearmotor kann somit einen oder mehrere Wagen 107 unterschiedlich schnell beschleunigen oder bremsen. Dies unabhängig von den anderen Wagen 107.

Über das Positionsdetektionselement 143 kann jedem Wagen 107 eine absolute und/oder relative Position auf der Führungsbahn 803 zugeordnet werden.

Der Gedanke hier ist also insbesondere, mehrere getrennt voneinander gebildete Linearmotoren vorzusehen, die entsprechend den im Rahmen dieser Beschreibung (inklusive der Bezugnahme auf die in der Beschreibung genannten deutschen Patentanmeldungen DE 10 2012 204 916.9 und DE 10 2012 204 919.3) beschriebenen Linearmotoren gebildet sind. Diese Linearmotoren werden miteinander verbunden, so dass beispielsweise eine in sich geschlossene oder offene Führungsbahn gebildet wird. Die Linearmotoren sind hierbei entsprechend der gewünschten Form der Führungsbahn gebildet. Die einzelnen Führungsschienen der Linearmotoren bilden die Führungsbahn, auf welcher die Wagen mit ihren Laufrollen fahren.

Die Führungsbahn ist also modular aus den mehreren Linearmotoren aufgebaut, die unabhängig von einander betrieben und angesteuert werden können. Sollte beispielsweise ein Austausch eines Linearmotors notwendig sein, so kann dies ohne größeren Aufwand schnell und einfach durchgeführt werden.

Es kann vorzugsweise vorgesehen sein, dass sich mehrere Linearmotoren eine gemeinsame Führungsschiene teilen oder aufweisen. Somit wird also eine durchgängige Lauffläche für die Laufrollen über mehrere Linearmotoren hinweg gebildet. Somit können in vorteilhafter Weise Ruckler in der Bewegung der Wagen 107 vermieden werden, die entstehen könnten, wenn die Wagen 107 von einer Führungsschiene eines Linearmotors zu einer weiteren Führungsschiene eines weiteren Linearmotors fahren. Denn üblicherweise können sich Spalte zwischen den einzelnen Führungsschienen bilden, beispielsweise aufgrund von Temperaturunterschieden. Bei einer durchgängigen Führungsschiene besteht diese Gefahr nicht.

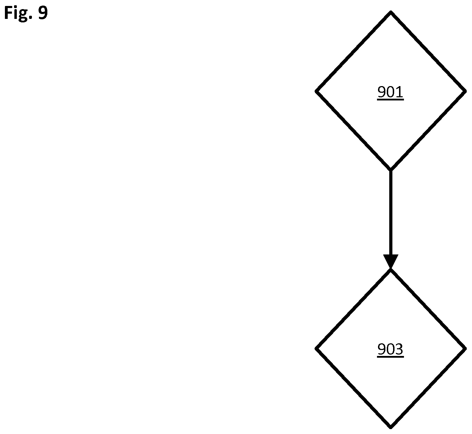

Fig. 9 zeigt ein Ablaufdiagramm eines Verfahrens zum Betreiben einer Transportvorrichtung. Bei der Transportvorrichtung kann es sich beispielsweise um eine der vorstehend näher beschriebenen Transportvorrichtungen handeln.

Gemäß einem Schritt 901 wird der Wagen verlagert und hierbei mittels der Führungsschiene geführt. Gemäß einem Schritt 903 wird während des Verlagerns eine elektrische Verbindung mittels der elektrischen Kontakteinrichtung zwischen dem Wagen und der Führungsschiene gebildet.

Fig. 10 zeigt das Bauteil 117 gemäß dem linearen Transportsystem 301 gemäß Fig. 3.

Das Bauteil 117 umfasst einen ringförmigen Abschnitt 1001 mit einer Aussparung 1003. Die Aussparung 1003 ist in ihrem Durchmesser so bemessen, dass die Schraube 305 durch die Aussparung 1003 gesteckt werden kann, um den ringförmigen Abschnitt 1001 an die Laufachse 303 anzuschrauben.

Dem ringförmigen Abschnitt 1001 schließt sich ein Federschenkel 1005 an, der unter einem vorbestimmten Winkel vom ringförmigen Abschnitt 1001 absteht. Dem Federschenkel 1005 schließt sich ein Kontaktabschnitt 1007 an, der mit dem Federschenkel 1005 einen Winkel derart bildet, dass der Kontaktabschnitt 1007 zu dem ringförmigen Abschnitt 1001 parallel verläuft. Der Federschenkel 1005 und der Kontaktabschnitt 1007 bilden einen Kontaktarm zur Kontaktierung des Bauteils 117 mit der Kontaktfläche 122. Der Kontaktabschnitt 1007 weist eine Erhöhung oder einen Vorsprung 1009 auf, die respektive der linsenförmig gebildet sein kann. Die Erhöhung 1009 kontaktiert die Kontaktfläche 122, liegt also an der Kontaktfläche 122 an. In einer nicht gezeigten Ausführungsform kann vorgesehen sein, dass der Kontaktabschnitt 1007 keine solche Erhöhung aufweist, also eben ist.

Das Material und die Bemaßungen des Bauteils 117 sind derart gewählt, dass der Federschenkel 1005 als elastisches Element zwischen dem Kontaktabschnitt 1007 und dem ringförmigen Abschnitt 1001 wirkt. Dadurch kann eine Federkraft gebildet werden, die die Erhöhung 1009 des Kontaktabschnitts 1007 während der Führung gegen die Kontaktfläche 122 drückt.

In einer nicht gezeigten Ausführungsform, insbesondere wenn keine Erhöhung 1009 vorgesehen ist, kann vorgesehen sein, dass an dem Kontaktabschnitt 1007 mehrere elektrisch leitfähige Bürstenhaare und/oder mehrere elektrisch leitfähige Bürstenfasern angeordnet sind. In einer solchen Ausführungsform ist das Bauteil 117 als eine Antistatikbürste gebildet.

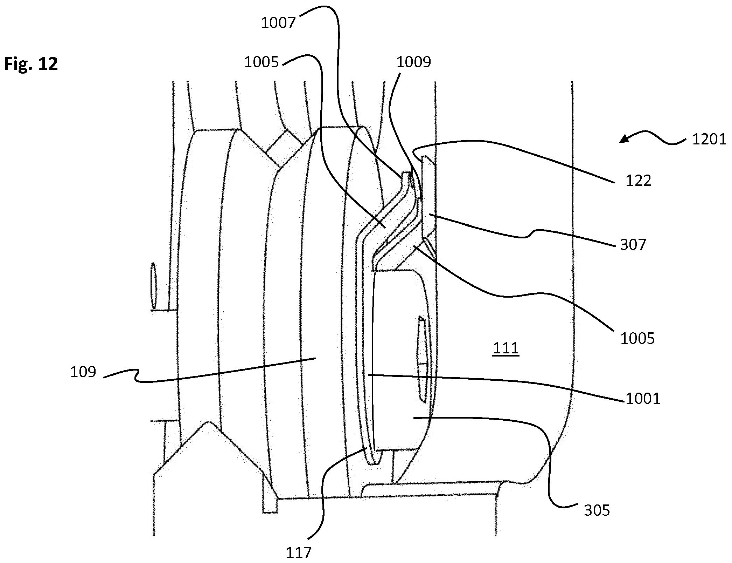

Fig. 11 zeigt ein weiteres Bauteil 117, wie es beispielsweise im linearen Transportsystem 301 gemäß Fig. 3 verwendet werden kann (vgl. Fig. 12).

Das weitere Bauteil 117 ist im Wesentlichen analog zu dem in Fig. 10 gezeigten Bauteil 117 gebildet. Als ein Unterschied weist das weitere Bauteil 117 zwei Federschenkel 1005 auf, die analog zu Fig. 10 jeweils einen Kontaktabschnitt 1007 umfassend eine Erhöhung oder einen Vorsprung 1009 aufweisen. Die entsprechenden Ausführungen gelten hier analog. Dadurch ist also eine Zweifachkontaktierung bewirkt. Somit kann beispielsweise einer der beiden Kontaktabschnitte 1007 seinen Kontakt zur Kontaktfläche 122 verlieren, ohne dass die elektrische Verbindung zwischen dem Wagen 107 und der Führungsschiene 111 vollständig unterbrochen wird.

Auch in der Ausführungsform gemäß Fig. 11 kann das Bauteil 117 als eine Antistatikbürste gebildet sein. Das Bauteil 117 kann also vorzugsweise an seinen Kontaktabschnitten 1007 jeweils mehrere elektrisch leitfähige Bürstenhaare und/oder mehrere elektrisch leitfähige Bürstenfasern aufweisen.

In weiteren nicht gezeigten Ausführungsbeispielen können mehr als zwei Federschenkel mit entsprechenden Kontaktabschnitten umfassend eine Erhöhung oder einen Vorsprung vorgesehen sein. Beispielsweise können drei Federschenkel vorgesehen sein. Somit ist also in vorteilhafter Weise eine Mehrfachkontaktierung bewirkt, was eine Redundanz hinsichtlich der elektrischen Verbindung bewirkt. An den Kontaktabschnitten sind beispielsweise jeweils mehrere elektrisch leitfähige Bürstenhaare und/oder mehrere elektrisch leitfähige Bürstenfasern angeordnet. In dieser Ausführungsform ist das Bauteil also eine Antistatikbürste. Vorzugsweise weisen bei mehreren Kontaktabschnitten 1007 nur einige der Kontaktabschnitte 1007 mehrere elektrisch leitfähige Bürstenhaare und/oder mehrere elektrisch leitfähige Bürstenfasern auf. Auch solche Ausführungsformen sind Antistatikbürsten.

Die Bauteile 117, die im Zusammenhang mit den Fig. 11 und 12 näher beschrieben wurden, sind für sich auch als solche allein offenbart, das heißt insbesondere unabhängig und losgelöst von den weiteren konkreten Merkmalen der in den weiteren Figuren gezeigten Ausführungsbeispiele.

Fig. 12 zeigt ein lineares Transportsystem 1201, welches im Wesentlichen analog zu dem linearen Transportsystem 301 gemäß Fig. 3 aufgebaut ist.

Im linearen Transportsystem 1201 wird das Bauteil 117 gemäß Fig. 11 verwendet. Des Weiteren ist als ein weiterer Unterschied der Oberflächenvorsprung 307 als ein von der Führungsschiene 111 getrennt gebildetes Bauelement gebildet, beispielsweise als eine separate Leiste. Die Leiste kann vorzugsweise an die Führungsschiene 111 angeschraubt werden. Insbesondere können Abstandshalter zwischen der Führungsschiene 111 und der Leiste vorgesehen sein, so dass die Leiste beabstandet zu der Führungsscheine 111 angeordnet ist. Die Form und/oder das Materials des getrennt gebildeten Oberflächenvorsprungs können beispielsweise analog zum integral gebildeten Oberflächenvorsprung gebildet sein.

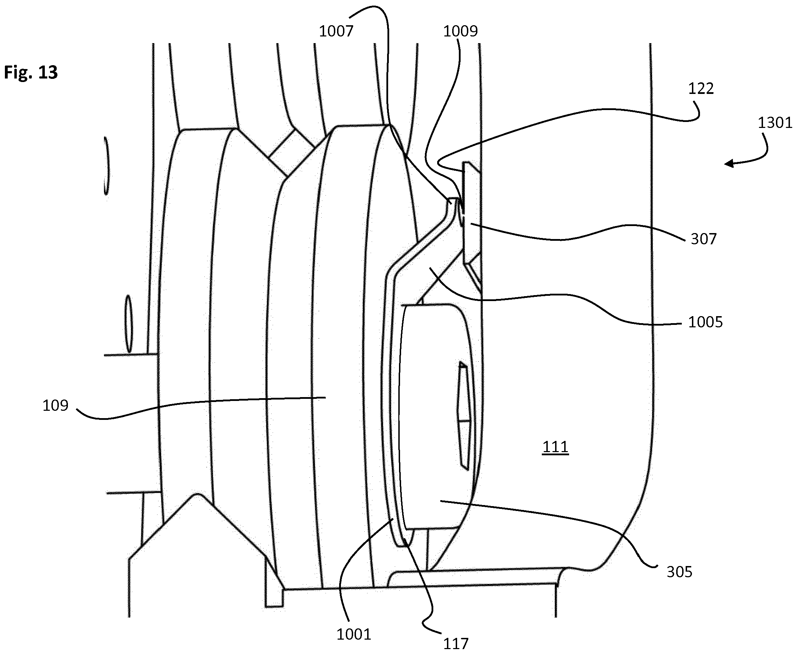

Fig. 13 zeigt noch ein lineares Transportsystem 1301, welches im Wesentlichen analog zu dem linearen Transportsystem 301 gemäß Fig. 3 aufgebaut ist.

Es wird in dem linearen Transportsystem 1301 das Bauteil 117 gemäß Fig. 10 verwendet, so wie es bereits in Fig. 3 gezeigt wurde. Als ein Unterschied zum linearen Transportsystem 301 ist im linearen Transportsystem 1301 der Oberflächenvorsprung 307 als ein von der Führungsschiene 111 getrennt gebildetes Bauelement gebildet analog zu dem linearen Transportsystem 1201 gemäß Fig. 12. Auf die entsprechenden Ausführungen wird verwiesen.

Zusammenfassend umfasst die Erfindung insbesondere den Gedanken, eine elektrische Verbindung während des Verlagerns eines Wagens mittels eines Linearmotors zwischen dem Wagen und der Führungsschiene zu bilden. Diese elektrische Verbindung wird insbesondere mittels eines elektrisch leitenden Bauteils bewirkt, das verschieden von der Laufrolle des Wagens gebildet ist.

## Patentansprüche

1. Lineares Transportsystem (101), umfassend:
zumindest einen Wagen (107) aufweisend zumindest einen Permanentmagneten (141) und mehrere Laufrollen (109),
eine bestrombare Statoreinrichtung (123) aufweisend mehrere Spulen,
eine an der Statoreinrichtung (123) angeordnete Führungsschiene (111) zum Führen des Wagens (107),
wobei die Führungsschiene (111) Laufflächen (113) zum Abrollen der Laufrollen (109) des Wagens (107) umfasst, so dass die Laufrollen (109) während eines mittels der Führungsschiene (111) geführten Verlagerns des Wagens (107) auf der Laufflächen (113) abrollen können,
eine mit der Führungsschiene (111) elektrisch verbundene elektrisch leitende Kontaktfläche (122), und
zumindest eine verschieden von der Laufrolle (109) gebildete elektrische Kontakteinrichtung (115), die ausgebildet ist,
beim mittels der Führungsschiene (111) geführten Verlagern des Wagens (107) eine elektrische Verbindung zwischen dem Wagen (107) und der Führungsschiene (111) auszubilden,
wobei die elektrische Kontakteinrichtung (115) zumindest ein am Wagen (107) angeordnetes elektrisch leitendes Bauteil (117) umfasst, das mit dem Wagen (107) elektrisch verbunden und ausgebildet ist, während des geführten Verlagerns die Kontaktfläche (122) elektrisch zu kontaktieren,
**dadurch gekennzeichnet, dass**
ein Kontaktpunkt des Bauteils (117) mit der Kontaktfläche (122) während der geführten Verlagerung dem geometrischen Schwerpunkt (705) eines mehreckigen Bereiches gegenüberliegt, dessen Ecken jeweils durch einen Mittelpunkt (701) der jeweiligen Laufachsen (303) der Laufrollen (109) gebildet sind.

2. Transportsystem (101) nach Anspruch 1, **dadurch gekennzeichnet, dass** zwischen dem Bauteil (117) und dem Wagen (107) eine Feder (119) zum Beaufschlagen des Bauteils (117) mit einer Federkraft vorgesehen ist, so dass das Bauteil (117) mittels der Federkraft an die Kontaktfläche (122) während der Führung gedrückt ist.

3. Transportsystem (101) nach Anspruch 2, **dadurch gekennzeichnet, dass** der Wagen (107) eine Ausnehmung (121) umfasst, in welcher die Feder (119) aufgenommen ist.

4. Transportsystem (101) nach einem der Ansprüche 1 bis 3, wobei das Bauteil (117) an einer Laufachse (303) der Laufrolle (109) befestigt ist.

5. Transportsystem (101) nach einem der Ansprüche 1 bis 4, **dadurch gekennzeichnet, dass** eine Fluidbarriereeinrichtung zum Schützen der Kontaktfläche (122) vor einem auf einer Führungsschienenoberfläche fließenden Fluid vorgesehen ist.

6. Transportsystem (101) nach Anspruch 5, **dadurch gekennzeichnet, dass** die Fluidbarriereeinrichtung eine Fluidabflusseinrichtung umfasst, über die ein auf einer Führungsschienenoberfläche fließendes Fluid abfließen kann.

7. Transportsystem (101) nach Anspruch 5 oder 6, **dadurch gekennzeichnet, dass** die Fluidbarriereeinrichtung einen Oberflächenvorsprung (307) der Führungsschienenoberfläche umfasst.

8. Transportsystem (101) nach Anspruch 7, **dadurch gekennzeichnet, dass** der Oberflächenvorsprung (307) eine Schwalbenschwanzform aufweist und die Kontaktfläche (122) eine von der Führungsschienenoberfläche abgewandte Oberfläche der Schwalbenschwanzform ist.

9. Transportsystem (101) nach Anspruch 7 oder 8, **dadurch gekennzeichnet, dass** die Fluidbarriereeinrichtung eine separat von der Führungsschiene (111) gebildete Leiste umfasst, die beabstandet von der Führungsschienenoberfläche an der Führungsschiene (111) angeordnet und mit der Führungsschiene (111) elektrisch verbunden ist, wobei die Kontaktfläche (122) eine Oberfläche der Leiste ist.

10. Transportsystem (101) nach einem der Ansprüche 2 bis 9, **dadurch gekennzeichnet, dass** das Bauteil (117) mehrere Kontaktarme für die elektrische Kontaktierung aufweist.

11. Transportsystem (101) nach einem der Ansprüche 1 bis 10, **dadurch gekennzeichnet, dass** das Bauteil (117) als Federelement ausgebildet ist.

12. Transportsystem (101) nach einem der Ansprüche 1 bis 11, **dadurch gekennzeichnet, dass** die Kontaktfläche (122) mit einer elektrisch leitenden Schicht beschichtet ist.

13. Transportsystem nach einem der Ansprüche 1 bis 12, **dadurch gekennzeichnet, dass** das Bauteil (117) eine Antistatikbürste aufweist.

14. Verfahren zum Betreiben eines linearen Transportsystems (101) nach einem der vorherigen Ansprüche, **dadurch gekennzeichnet, dass** beim mittels der Führungsschiene (111) geführten Verlagern des Wagens (107) die elektrische Kontakteinrichtung (115) eine elektrische Verbindung zwischen dem Wagen (107) und der Führungsschiene (111) bildet, wobei das elektrisch leitende Bauteil (117) der elektrischen Kontakteinrichtung (115) mit dem Wagen (107) elektrisch verbunden und ausgebildet ist, während des geführten Verlagerns die Kontaktfläche (122) elektrisch zu kontaktieren, wobei der Kontaktpunkt des Bauteils (117) mit der Kontaktfläche (122) während der geführten Verlagerung dem geometrischen (705) des mehreckigen Bereiches gegenüberliegt, dessen Ecken jeweils durch einen Mittelpunkt (701) der jeweiligen Laufachsen (303) der Laufrollen (109) des Wagen (107) gebildet werden.

## Claims

1. Linear transporting system (101) comprising:
at least one carriage (107), having at least one permanent magnet (141) and a plurality of rollers (109),
an energizable stator device (123), having a plurality of coils,
a guide rail (111), which is arranged on the stator device (123) and is intended for guiding the carriage (107), wherein the guide rail (111) comprises running surfaces (113), on which the rollers (109) of the carriage (107) can roll, it therefore being possible for the rollers (109) to roll on the running surfaces (113) during displacement of the carriage (107) with guidance by means of the guide rail (111),
an electrically conductive contact surface (122), which is connected electrically to the guide rail (111), and
at least one electrical contact device (115), which is formed separately from the roller (109) and is designed to form an electrical connection between the carriage (107) and the guide rail (111) when the carriage (107) is being displaced with guidance by means of the guide rail (111),
wherein the electrical contact device (115) comprises at least one electrically conductive component (117), which is arranged on the carriage (107), is connected electrically to the carriage (107) and is designed to establish electrical contact with the contact surface (122) during the guided displacement,
**characterized in that**
a point of contact of the component (117) with the contact surface (122) during the guided displacement is located opposite the geometric centre (705) of a polygonal region of which the corners are formed in each case by a centre point (701) of the respective spindles (303) of the rollers (109).

2. Transporting system (101) according to Claim 1, **characterized by** the provision, between the component (117) and the carriage (107), of a spring (119) for subjecting the component (117) to a spring force, the component (117) therefore being pushed onto the contact surface (122) by means of the spring force during the guided displacement.

3. Transporting system (101) according to Claim 2, **characterized in that** the carriage (107) comprises a recess (121), in which the spring (119) is accommodated.

4. Transporting system (101) according to one of Claims 1 to 3, wherein the component (117) is fastened on a spindle (303) of the roller (109).

5. Transporting system (101) according to one of Claims 1 to 4, **characterized in that** a fluid-barrier device is provided for protecting the contact surface (122) against a fluid flowing on a guide-rail surface.

6. Transporting system (101) according to Claim 5, **characterized in that** the fluid-barrier device comprises a fluid-drainage device, via which a fluid flowing on a guide-rail surface can flow off.

7. Transporting system (101) according to Claim 5 or 6, **characterized in that** the fluid-barrier device comprises a surface protrusion (307) of the guide-rail surface.

8. Transporting system (101) according to Claim 7, **characterized in that** the surface protrusion (307) is of dovetail shape, and the contact surface (122) is a surface of the dovetail shape which is directed away from the guide-rail surface.

9. Transporting system (101) according to Claim 7 or 8, **characterized in that** the fluid-barrier device comprises a strip which is formed separately from the guide rail (111), is arranged on the guide rail (111) at a distance from the guide-rail surface and is connected electrically to the guide rail (111), wherein the contact surface (122) is a surface of the strip.

10. Transporting system (101) according to one of Claims 2 to 9, **characterized in that** the component (117) has a plurality of contact arms for establishing the electrical contact.

11. Transporting system (101) according to one of Claims 1 to 10, **characterized in that** the component (117) is designed in the form of a spring element.

12. Transporting system (101) according to one of Claims 1 to 11, **characterized in that** the contact surface (122) is coated with an electrically conductive layer.

13. Transporting system according to one of Claims 1 to 12, **characterized in that** the component (117) has an antistatic brush.

14. Method of operating a linear transporting system (101) according to one of the preceding claims, **characterized in that** the electrical contact device (115) forms an electrical connection between the carriage (107) and the guide rail (111) when the carriage (107) is being displaced with guidance by means of the guide rail (111), wherein the electrically conductive component (117) of the electrical contact device (115) is connected electrically to the carriage (107) and is designed to establish electrical contact with the contact surface (122) during the guided displacement, wherein the point of contact of the component (117) with the contact surface (122) during the guided displacement is located opposite the geometric centre (705) of the polygonal region of which the corners are formed in each case by a centre point (701) of the respective spindles (303) of the rollers (109) of the carriage (107).

## Revendications

1. Système transporteur linéaire (101), comprenant :
au moins une voiture (107) comportant au moins un aimant permanent (141) et plusieurs galets de roulement (109) ;
un dispositif à stator (123) alimentable en courant et comportant plusieurs bobines ;
un rail de guidage (111) disposé au niveau du dispositif à stator (123) pour guider la voiture (107) ;
le rail de guidage (111) comprenant des surfaces de roulement (113) pour dérouler les galets de roulement (109) de la voiture (107), de sorte que les galets de roulement (109) puissent se dérouler sur les surfaces de roulement (113) pendant un déplacement, guidé à l'aide du rail de guidage (111), de la voiture (107) ;
une surface de contact (122) électriquement conductrice reliée électriquement au rail de guidage (111) ; et
au moins un dispositif de contact électrique (115) formé de façon différente du galet de roulement (109) et réalisé, lors du déplacement, guidé à l'aide du rail de guidage (111), de la voiture (107) pour former une liaison électrique entre la voiture (107) et le rail de guidage (111),
le dispositif de contact électrique (115) comprenant au moins un composant (117) électriquement conducteur disposé au niveau de la voiture (107) et relié électriquement à la voiture (107) et réalisé pour mettre en contact électriquement, pendant le déplacement guidé, la surface de contact (122) ;
**caractérisé en ce que** :
un point de contact du composant (117) avec la surface de contact (122) pendant le déplacement guidé est opposé au centre de gravité géométrique (705) d'une zone pluriangulaire dont les coins sont respectivement formés par un point central (701) des axes de roulement (303) respectifs des galets de roulement (109).

2. Système transporteur (101) selon la revendication 1, **caractérisé en ce qu'**un ressort (119) est prévu entre le composant (117) et la voiture (107) pour charger le composant (117) avec une force de ressort, de sorte que le composant (117) soit comprimé contre la surface de contact (122) pendant le guidage à l'aide de la force de ressort.

3. Système transporteur (101) selon la revendication 2, **caractérisé en ce que** la voiture (107) comprend un évidement (121) dans lequel le ressort (119) est logé.

4. Système transporteur (101) selon l'une quelconque des revendications 1 à 3, le composant (117) étant fixé à un axe de roulement (303) du galet de roulement (109).

5. Système transporteur (101) selon l'une quelconque des revendications 1 à 4, **caractérisé en ce qu'**un dispositif de barrière de fluide est prévu pour protéger la surface de contact (122) d'un fluide s'écoulant sur une surface de rail de guidage.

6. Système transporteur (101) selon la revendication 5, **caractérisé en ce que** le dispositif de barrière de fluide comprend un dispositif d'écoulement de fluide via lequel un fluide s'écoulant sur une surface de rail de guidage peut s'évacuer.

7. Système transporteur (101) selon la revendication 5 ou 6, **caractérisé en ce que** le dispositif de barrière de fluide comprend une saillie superficielle (307) de la surface de rail de guidage.

8. Système transporteur (101) selon la revendication 7, **caractérisé en ce que** la saillie superficielle (307) présente une forme de queue d'aronde et que la plaque de contact (122) est une surface de la forme de queue d'aronde opposée à la surface de rail de guidage.

9. Système transporteur (101) selon la revendication 7 ou 8, **caractérisé en ce que** le dispositif de barrière de fluide comprend une baguette formée séparément du rail de guidage (111) disposée au niveau du rail de guidage (111) séparément de la surface de rail de guidage et relié électriquement au rail de guidage (111), la plaque de contact (122) étant une surface de la baguette.

10. Système transporteur (101) selon l'une quelconque des revendications 2 à 9, **caractérisé en ce que** le composant (117) comporte plusieurs bras de contact pour la mise en contact électrique.

11. Système transporteur (101) selon l'une quelconque des revendications 1 à 10, **caractérisé en ce que** le composant (117) est réalisé sous la forme d'un élément de ressort.

12. Système transporteur (101) selon l'une quelconque des revendications 1 à 11, **caractérisé en ce que** la surface de contact (122) est revêtue d'une couche électriquement conductrice.

13. Système transporteur selon l'une quelconque des revendications 1 à 12, **caractérisé en ce que** le composant (117) comporte une brosse antistatique.

14. Procédé de fonctionnement d'un système transporteur linéaire (101) selon l'une quelconque des revendications précédentes, **caractérisé en ce que** lors du déplacement, guidé à l'aide du rail de guidage (111), de la voiture (107), le dispositif de contact électrique (115) forme une liaison électrique entre la voiture (107) et le rail de guidage (111), le composant (117) électriquement conducteur du dispositif de contact électrique (115) étant relié électriquement à la voiture (107) et étant réalisé pour mettre en contact électriquement, pendant le déplacement guidé, la surface de contact (122), le point de contact du composant (117) avec la surface de contact (122) pendant le déplacement guidé étant opposé au centre de gravité géométrique (705) de la zone pluriangulaire dont les coins sont respectivement formés par un point central (701) des axes de roulement (303) respectifs des galets de roulement (109) de la voiture (107).
